# EUROPÄISCHE PATENTSCHRIFT

(11) **EP 2 839 730 B1**
(45) Veröffentlichungstag und Bekanntmachung des Hinweises auf die Patenterteilung: **10.05.2017**
(21) Anmeldenummer: 14180828.7
(22) Anmeldetag: 13.08.2014
(51) Int. Cl.: A01D 78/02, A01D 80/02

(54) **Zettwender**
Tedder
Faneuse

(30) Priorität: 20.08.2013 IT BZ20130042
(43) Veröffentlichungstag der Anmeldung: 25.02.2015
(73) Patentinhaber: Pichler, Thomas, 39015 St. Leonhard in Passeier (IT)
(72) Erfinder: Pichler, Thomas, 39015 St. Leonhard in Passeier (IT)
(74) Vertreter: Ausserer, Anton

(56) Entgegenhaltungen:
- EP-A1- 0 808 559
- CH-A- 211 445
- DE-U1-202011 106 561
- US-A- 2 636 335
- US-A- 2 899 795
- US-A- 2 992 525
- US-A- 4 467 591

## Beschreibung

Die vorliegende Erfindung bezieht sich auf einen Zettwender gemäß dem Oberbegriff des Patentanspruchs 1.

Geräte dieser Art besitzen ein schweres Gewicht, was sich negativ auf Arbeiten auswirkt, die in Gebirgen auf Abhängen durchzuführen sind. Derartige Geräte bekannter Art sind in ihrer Konstruktion auch beim Übergang von Heuwender auf die Bildung von Schwaden kompliziert. Sie sind überdies schwer zu bedienen und müssen über Antriebe als Werkzeugträger bewegt werden

Der in DE DE202011106561U beschriebene Zettwender ist mit einer zu einer Vorschubeinrichtung ausgestattet, welche das Heu in eine Richtung ablenkt, auch auf einer flachen Oberfläche.

In DE202011106561Uwird in keiner Weise das Problem beschrieben oder gelöst, das durch ein hohes Gewicht auf Abhängen entsteht. Ein leichter Zettwender erlaubt eine erleichterte Bedienung und minimiert den Schaden den ein umfallender Zettwender verursachen kann. Außerdem ist durch die Anbringung der Zinken direkt auf dem Werkzeugträger der Schwerpunkt tiefer, was eine höher Stabilität auf Abhängen ergibt.

Die Aufgabe der vorliegenden Erfindung liegt daher darin einen Zettwender vorzuschlagen, der ein niedriges Gewicht aufweist und mit Leichtigkeit auch auf Abhängen bedient werden kann.

Diese Aufgabe wird durch einen Zettwender gemäß dem kennzeichnenden Teil des Patentanspruchs 1 gelöst.

Durch das Vorsehen der Heusammelwerkzeuge nebeneinander unter gegenseitigem Abstand auf einer gemeinsamen, horizontalen drehbaren Welle ist zwischen den Werkzeugen ein Kammelement einfügbar, zwischen dessen Lücken die Werkzeuge drehbar sind, die vom Kammelement sowohl in Vorschubrichtung des Gerätes als auch des Kammelementes der Art vorspringen, das das von

den Heusammelwerkzeugen gesammelte Heu sich von den Werkzeugen loslöst, sobald diese in das Kammelement wieder zurückgeführt werden, um auf den Querbalken zugeleitet zu werden. Dieser geht bevorzugter Weise in eine Wand über, die gleichfalls zur Vorschubrichtung des Gerätes quer liegt und sich bevorzugter Weise gekrümmt in Vorschubsrichtung der Art bewegt, dass das Heu in Richtung der Seiten des Gerätes außerhalb desselben auf den Boden geleitet wird.

Bei Heueinbringung quer zur Neigung eines Abhangs wird das gesammelte Heu zweckmäßigerweise von der Wand nach der Seite hin nach dem Gerät unter vollständiger Ausbildung des Schwadens auf dieser Seite des Gerätes entladen.

Der Übergang des Heufangweges auf den Heuablenker ist daher kontinuierlich ohne Unterbrechung wegen des Querbalkens des Kammerelementes am Leitblech, das das Heu zur quer zur Vorschubrichtung des Gerätes leitet.

Der Antrieb der Werkzeugträgerwelle erfolgt beispielsweise über ein Riemen- oder Zahnradgetriebe, das mit einem Hydromotor oder einer anderen Antriebsart verbunden ist.

Auf bekannte Art und Weise ist das Gerät zweckmäßigerweise mit Rädern versehen und selbstfahrend.

Weitere Merkmale und Einzelheiten gehen aus den Patentansprüchen und aus der folgenden Beschreibung von bevorzugten, in der beigefügten Zeichnung dargestellten Ausführungsformen hervor. Es zeigen,

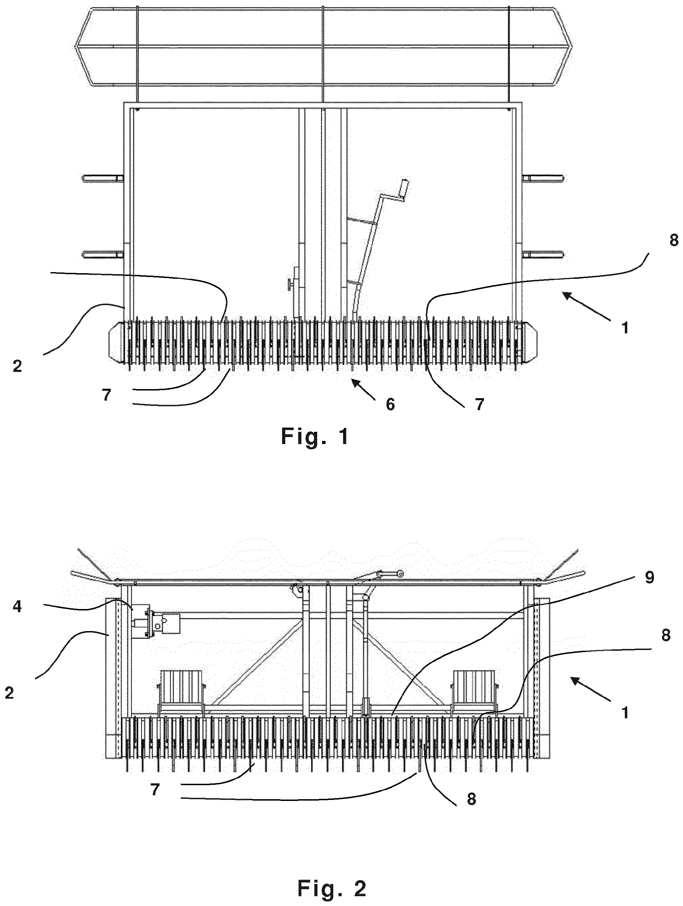

Figur 1 eine Stirnansicht eines Zettwenders,
Figur 2 eine Draufsicht von Figur 1,

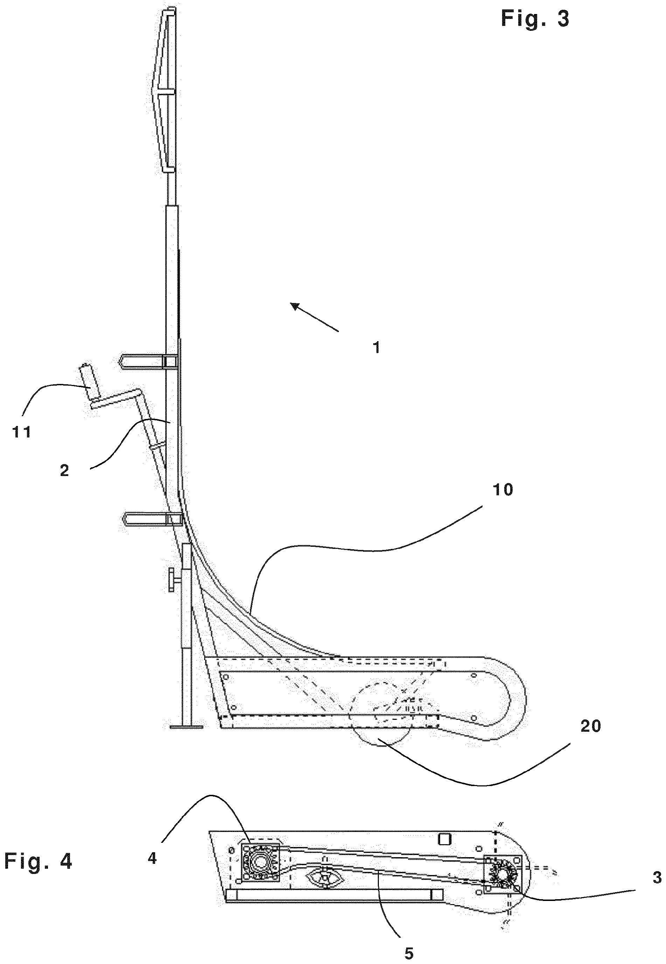

Figur 3 eine Seitenansicht im Aufriss,
Figur 4 eine Inneneinzelheit von Figur 3,
Figur 5 eine bevorzugte Ausführungsform eines Werkzeuges in Seitenansicht,
Figur 6 eine Draufsicht von Figur 5 und
Figur 7 eine Vorderansicht einer Werkzeugträger welle mit Werkzeugen.

In den Figuren ist mit der Bezugsziffer 1 in seiner Gesamtheit ein Zettwender angegeben.

Der Zettwender 1 umfasst einen Rahmen 2, eine Werkzeugträgerwelle 3, mit einer zu dem zu bearbeitenden Boden parallelen und zur Vorschubrichtung quer liegenden Achse, einen Antrieb 4, der getriebemäßig über ein Riemengetriebe 5 mit der Werkzeugträgerwelle 3 verbunden ist, und Räder 20 zur Verschiebung des Zettwenders 1 auf dem zu bearbeitenden Boden und zwar um zum Beispiel auf demselben ausgebreitetes Heu zu sammeln.

Die Werkzeugträgerwelle 3 ist mit Werkzeugen 6 versehen, die durch Verlängerungszinken 7 der Enden von Drehschraubenfedern gebildet werden, deren Windungen festliegend um die Achse der Welle 3 der Art gewickelt sind, dass sie in zur Achse der Welle 3 senkrechten Ebenen gedreht werden, sobald diese durch den Antrieb 4 bewegt wird.

Die Zinken 7 sind in Lücken 8 eines am Rahmen 2 befestigten Kammelementes 9 der Art eingeschoben, dass den Zinken 7 ermöglicht wird innerhalb der Lücken 8 um zu laufen, indem sie oberhalb von drei Seiten des Kammelementes 9 vorstehen; das Material kann so vom Boden aufgehoben ergriffen und von den Zinken befreit werden, sobald diese innerhalb des Kammelementes 9 wieder eintreten.

Das Kammelement 9 weist einen durch ein Leitblech 10 gebildeten Rücken auf, das auf das Kammelement 9 übergeht, um sich nach oben bevorzugter Weise gekrümmt in Richtung des Vorschubs des Zettwenders 1 zu erstrecken.

Das gesammelte Material wird daher auf das Leitblech 10 geleitet, dass sich im Gebirge mit geneigter Stellung des Zettwenders 1 talwärts neigt. Aufgrund dieser Führung wird das Material in der Form eines Schwadens auf dem Boden abgelegt, wobei der Vorgang der Sammellader erleichtert wird.

Der erfindungsgemäße Zettwender 1 ist schließlich mit einem Bedienungsorgan 11 bekannter Art versehen.

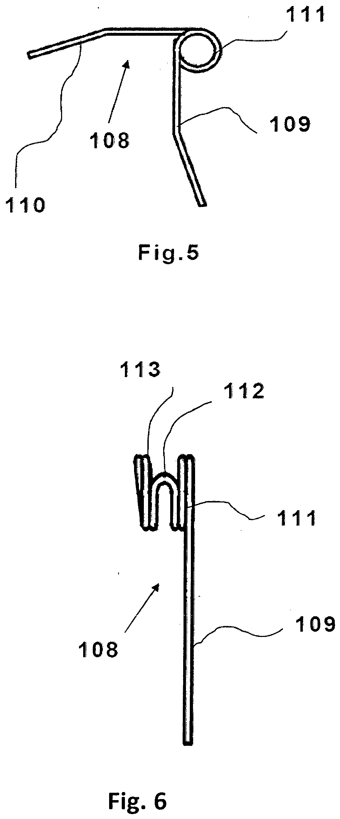

Versuche haben gezeigt, dass die Drehschraubenfedern 108 auf der Werkzeugträgerwelle 3 mit ihren die Zinken 109, 110 bildenden Endabschnitten von Windungen 111, 112 in einer Aufwickelrichtung angeordnet sind, die der Drehrichtung der Werkzeugträgerwelle 3 entspricht. So wird bei Krafteinwirkung auf die Zinken 109 und 110 die Neigung der Windungen 111 und 112 vermieden, sich von der Werkzeugträgerwelle 3 abzuheben und die Kraftübertragung zwischen Feder und Welle zu verlieren: Figur 5 und 6.

Bevorzugter Weise sind die Zinken 109 und 110 einer jeden Drehschraubenfeder 108 um 90° zueinander versetzt angeordnet sind.
In einer Variante sind die Windungen 111 und 112 an einer Zwischenstelle 113 der Drehschraubenfeder 108 um 180° umgelenkt, wobei sich die Zwischenstelle 113 bevorzugter Weise in der Mitte der Windungen befindet.

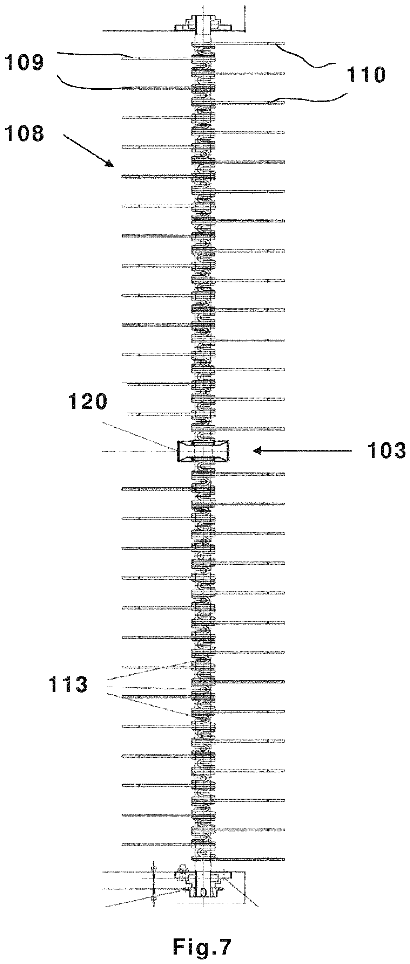

Die in Figur 7 dargestellte Werkzeugträgerwelle 103 ist mit einer Vielzahl von Drehschraubenfedern 108 bestückt, die eng aneinander gereiht angeordnet sind. Die Welle 103 wird durch einen mittigen Lagerbock 120 gelagert.

## Patentansprüche

1. Zettwender (1) für Abhänge, umfassend einen Rahmen (2), eine Werkzeugträgerwelle (3) mit einer zu dem zu bearbeitenden Boden parallelen und zur Vorschubrichtung quer liegenden Achse, einen Antrieb (4), der getriebsmäßig über ein Riemengetriebe (5) mit der Werkzeugträgerwelle (3) verbunden ist, und Räder (20) zur Verschiebung des Zettwenders (1) auf dem zu bearbeitenden Boden, wobei die Werkzeuge (7) in Lücken (8) eines am Rahmen (2) befestigten Kammelementes (9) der Art eingeschoben werden, dass den Werkzeugen (7) ermöglicht wird innerhalb der Lücken (8) um zu laufen, indem sie mit Wirksamkeit oberhalb von drei Seiten des Kammelementes (9) vorstehen, wobei das Material so vom Boden aufgehoben ergriffen und von den Zinken befreit werden, sobald diese innerhalb des Kammelementes (9) wieder eintreten, wobei das Kammelement (9) in eine Wand übergeht, die gleichfalls Vorschubsrichtung des Gerätes quer liegt und sich bevorzugter Weise gekrümmt in Vorschubsrichtung der Art bewegt, dass das Heu in Richtung der Seiten des Gerätes außerhalb desselben auf den Boden geleitet wird, **dadurch gekennzeichnet, dass** die Werkzeugträgerwelle (3) mit Werkzeugen (6) ausgerüstet ist, die durch Verlängerungszinken (7) der Enden von Drehschraubenfedern (8) gebildet werden, deren Windungen festliegend um die Achse der Welle (3) der Art gewickelt sind, dass sie in zur Achse der Welle (3) senkrechten Ebenen gedreht werden, sobald diese durch den Antrieb (4) bewegt wird und dass die Drehschraubenfedern (108)auf der Werkzeugträgerwelle (3) mit ihren die Zinken(109, 110) bildenden Endabschnitten von Windungen (111, 112) in einer Aufwickelrichtung angeordnet sind, die der Drehrichtung der Werkzeugträgerwelle (3) entspricht.

2. Zettwender (1) nach Anspruch 1, **dadurch gekennzeichnet, dass** der Antrieb der Werkzeugträgerwelle über ein Riemen- oder Zahnradgetriebe erfolgt, das mit einem Hydromotor oder einer anderen Antriebsart verbunden ist.

3. Zettwender (1) nach Anspruch 1, **dadurch gekennzeichnet, dass** das Kammelement (9) einen durch ein Leitblech (10) gebildeten Rücken aufweist, das auf das Kammelement (9) übergeht, um sich nach oben bevorzugter Weise gekrümmt in Richtung des Vorschubs des Zettwenders (1) zu erstrecken.

4. Zettwender (1) nach einem der vorstehenden Ansprüche, **dadurch gekennzeichnet, dass** die Werkzeugträgerwelle (3) für sich allein ist.

5. Zettwender (1) nach einem der vorstehenden Ansprüche, **dadurch gekennzeichnet, dass** die Räder (20) höhenverstellbar sind.

6. Zettwender (1) nach Anspruch 1, **dadurch gekennzeichnet, dass** die Zinken (109, 110) einer jeden Drehschraubenfeder (108) um 90° zueinander versetzt angeordnet sind.

7. Zettwender (1) nach Anspruch 1, **dadurch gekennzeichnet, dass** die Windungen (111, 112) an einer Zwischenstelle (113) der Drehschraubenfeder (108) um 180° umgelenkt sind.

8. Zettwender (1) nach Anspruch 7, **dadurch gekennzeichnet, dass** sich die Zwischenstelle (113) in der Mitte der Windungen befindet.

## Claims

1. A hay tedder/rake combination (1) for slopes, comprising a frame (2), a tool-carrying shaft (3) whose axis is parallel to the treated soil and transverse to the forward direction, an actuator (4) connected with the tool-carrying shaft (3) by means of a belt drive (5) as a drive, and wheels (20) for the hay tedder/rake combination (1) to slide on the ground, wherein tools (7) are interleaved in gaps (8) of a comb (9) attached to the frame (2) to allow the tines (7) to rotate within the gaps (8) and effectively project out of three sides of the comb (9), the material being picked up from the ground as the tines rotate, and lifted and released from the tines when these fit back into the comb (9), the comb (9) being connected to a wall, which is also transverse to the forward direction and rises with a preferably curved profile in the forward direction to be able to convey hay to the sides of the comb outside on the ground, **characterized in that** the tool-carrying shaft (3) is equipped with tools (6) consisting of tines (7) that form extensions of the ends of helical torsion springs (8), whose turns are fixedly wound around the shaft (3) to rotate on planes orthogonal to the axis of the shaft (3) when the latter is driven by the actuator (4) and that the helical torsion springs (108) are arranged on the tool-carrying rotor (3) with the tines (109, 110) forming end portions of windings (11 1 , 112) in a winding direction that corresponds to the direction of rotation of the tool-carrying rotor.

2. A hay tedder/rake combination (1) as claimed in claim 1, **characterized in that** the tool-carrying shaft is driven by a belt or gear drive connected with a hydraulic motor or another type of drive.

3. A hay tedder/rake combination (1) as claimed in claim 1, **characterized in that** the comb (9) has a back consisting of a baffle (10) which is connected to the comb (9) to extend upwards with curved profile in the forward direction of the hay tedder/rake combination (1).

4. A hay tedder/rake combination (1) as claimed in any of the preceding claims, **characterized in that** only one tool-carrying shaft (3) is provided.

5. A hay tedder/rake combination (1) as claimed in any of the preceding claims, **characterized in that** said wheels (20) are adjustable in height.

6. A hay tedder/rake combination (1) as claimed in claim 1, **characterized in that** the tines (109, 110) of each helical torsion spring (108) are arranged at 90° from each other.

7. A hay tedder/rake combination (1) a as claimed in claim 1, **characterized in that** the windings (111, 112) are offset by 180° in an intermediate position (113) of the helical torsion spring (108).

8. A hay tedder/rake combination (1) as claimed in claim 7, **characterized in that** the intermediate position (113) is in the middle of the winding.

## Revendications

1. Combinaison faneur/andaineur (1) pour les pentes, comprenant un châssis (2), un arbre porte-outils (3), ayant un axe parallèle au sol travaillé et transversal à la direction d'avance, un actionneur (4) relié à l'arbre porte-outils (3) au moyen d'un entraînement constitué d'un entraînement par courroie (5), et des roues (20) pour le glissement de la combinaison faneur/andaineur (1) au sol, des outils (7) étant intercalés dans les espaces (8) d'un peigne (9) fixé au châssis (2) pour permettre la rotation des dents (7) dans les espaces (8) et la saillie efficace de ceux-ci sur trois côtés du peigne (9), le matériau étant prélevé du sol pendant la rotation des dents, et étant soulevé et dégagé des dents quand celles-ci reviennent dans le peigne (9), le peigne (9) étant relié à une paroi, elle aussi transversale à la direction d'avance et s'élevant de façon courbe dans la direction d'avance, pour pouvoir convoyer le foin à l'extérieur aux côtés du peigne sur le sol, **caractérisée en ce que** l'arbre porte-outils (3) est pourvu d'outils (6) consistant de dents (7) qui sont le prolongement d'extrémité de ressorts de torsion hélicoïdaux (8), dont les spires sont enroulées de façon fixe autour de l'arbre (3) pour tourner sur des plans orthogonaux par rapport à l'axe de l'arbre (3) lorsque celui-ci est entraîné par l'actionneur (4) et **en ce que** les ressorts de torsion hélicoïdaux (108) sont agencés sur le rotor porte-outils (3) avec les dents (109, 110) formant des parties d'extrémité d'enroulements (111, 112) dans une direction d'enroulement correspondant à la direction de rotation du rotor porte-outils ceux-ci.

2. Combinaison faneur/andaineur (1) selon la revendication 1, **caractérisée en ce que** l'arbre porte-outils est entraîné par un entraînement par courroie ou par engrenages relié à un moteur hydraulique ou un autre type d'entraînement.

3. Combinaison faneur/andaineur (1) selon la revendication 1, **caractérisée en ce que** le peigne (9) présente un dos constitué d'un déflecteur (10) relié au peigne (9) pour s'étendre verse le haut de façon courbe en direction d'avance de la combinaison faneur/andaineur (1).

4. Combinaison faneur/andaineur (1) selon l'une des revendications précédentes, **caractérisée en ce qu'**un seul arbre porte-outils (3) est prévu.

5. Combinaison faneur/andaineur (1) selon l'une des revendications précédentes, **caractérisée en ce que** lesdites roues (20) sont ajustables en hauteur.

6. Combinaison faneur/andaineur (1) selon la revendication 1, **caractérisée en ce que** les dents (109, 110) de chaque ressort de torsion hélicoïdal (108) sont décalées de 90° les unes par rapport aux autres.

7. Combinaison faneur/andaineur (1) selon la revendication 1, **caractérisée en ce que** les enroulements (111, 112) sont décalées de 180° dans une position intermédiaire (113) du ressort de torsion hélicoïdal (108).

8. Combinaison faneur/andaineur (1) selon la revendication 7, **caractérisée en ce que** la position intermédiaire (113) est au centre de l'enroulement.
